# EUROPEAN PATENT APPLICATION

(11) **EP 2 407 362 A2**
(43) Date of publication of application: **18.01.2012**
(21) Application number: 11167840.5
(22) Date of filing: 27.05.2011
(51) Int. Cl.: B60T 11/26, B60T 13/14, B60T 17/06

(54) **Reservoir tank, master cylinder using the reservoir tank, and brake system equipped with this master cylinder**

(30) Priority: 13.07.2010 JP 2010158828
(71) Applicant: Bosch Corporation, Tokyo 150-8360 (JP)
(72) Inventor: Sakai, Takayuki, Saitama-ken 355-0813 (JP); Koichi, Hironori, Saitama-ken 355-0813 (JP)
(74) Representative: Dreiss

(57) **Abstract**

A reservoir tank 5 that stores hydraulic fluid is equipped with a brake-use hydraulic fluid supply primary port 5a and a brake-use hydraulic fluid supply secondary port 5b that are disposed extending outward from a lower portion of an outer peripheral wall 5u and supply brake-use hydraulic fluid by means of inner holes 5j and 5o disposed extending into a primary fluid storage chamber 5f and a secondary fluid storage chamber 5g. Further, a primary fluid supply opening 5n and a secondary fluid supply opening 5r that allow the inner holes 5j and 5o disposed extending into the primary fluid storage chamber 5f and the secondary fluid storage chamber 5g to be communicated with the primary fluid storage chamber 5f and the secondary fluid storage chamber 5g are disposed orthogonal or substantially orthogonal with respect to the inner holes 5j and 5o.

## Description

### BACKGROUND

### Technical Field

The present invention relates to the technical fields of: a reservoir tank that is used in a hydraulically actuated system such as a hydraulic brake system utilizing hydraulic pressure such as oil pressure, is disposed away from a master cylinder, and stores hydraulic fluid; a master cylinder that uses the reservoir tank to generate hydraulic pressure; and a brake system that is equipped with this master cylinder.

### Related Art

Conventionally, among vehicles such as automobiles, there are vehicles that employ hydraulic brake systems as hydraulically actuated systems utilizing hydraulic pressure. A master cylinder that generates hydraulic pressure and a reservoir tank that stores hydraulic fluid supplied to this master cylinder are used in these hydraulic brake systems.

As a conventional hydraulic brake system using a reservoir tank and a master cylinder, there is known a hydraulic brake system where a tubular supply and discharge opening is disposed projecting into a main tank that is a reservoir tank disposed away from a master cylinder, a tubular connection opening is disposed projecting into a sub-tank disposed directly above the master cylinder, and the supply and discharge opening and the connection opening are coupled together by a pipe, whereby the main tank is connected to the master cylinder (e.g., see JP-A-2007-283858).

Incidentally, beginning with the main tank described in JP-A-2007-283858, in a reservoir tank disposed away from the master cylinder, it is common for the tubular supply and discharge opening to be projectingly disposed in a lower portion of an outer peripheral wall near a bottom surface of the reservoir tank for the purpose of effectively utilizing the hydraulic fluid inside the reservoir tank. In that case, usually, in order to ensure the flow rate of the hydraulic fluid from the reservoir tank, the tubular supply and discharge opening is disposed projecting in a substantially orthogonal direction outward from this outer peripheral wall so as to be communicated with a though hole disposed in the outer peripheral wall near the bottom surface of the reservoir tank.

However, when the tubular supply and discharge opening is simply disposed projecting outward from this outer peripheral wall so as to be communicated with the through hole in the outer peripheral wall of the reservoir tank, in a case where the vehicle has tilted such that the hydraulic fluid moves to the opposite side of the supply and discharge opening in a state where the storage quantity of the hydraulic fluid inside the reservoir tank is relatively small and the fluid level of that hydraulic fluid is near a MIN line that is a requisite minimum line, the fluid level of the hydraulic fluid reaches a position extremely close to the uppermost portion of the supply and discharge opening or a position lower than the uppermost portion of the supply and discharge opening. When the hydraulic fluid inside the reservoir tank is taken in by the actuation of a brake hydraulic pressure control unit such as a vehicle stability control unit when the fluid level of the hydraulic fluid is in this state, the potential for air to be taken in together with the hydraulic fluid and enter the downstream side (the sub-tank side and the master cylinder side) of the supply and discharge opening with respect to the flow of the hydraulic fluid is conceivable.

### SUMMARY

The present invention has been made in view of these circumstances, and it is an object thereof to provide: a reservoir tank that can suppress the intake of air, even in a state where the storage quantity of the hydraulic fluid is small and the vehicle has tilted, and ensure as large a quantity of the hydraulic fluid as possible; a master cylinder using the reservoir tank; and a brake system equipped with this master cylinder.

In order to solve this problem, a reservoir tank of the present invention comprises at least: a hydraulic fluid storage chamber that stores hydraulic fluid; and a hydraulic fluid supply port that is disposed projecting outward from a lower portion of an outer peripheral wall and supplies the hydraulic fluid by means of an inner hole disposed extending into the hydraulic fluid storage chamber, wherein a hydraulic fluid supply opening that allows the inner hole disposed extending into the hydraulic fluid storage chamber to be communicated with the hydraulic fluid storage chamber is disposed having a predetermined angle with respect to the inner hole.

Further, in the reservoir tank of the present invention, the hydraulic fluid supply opening is disposed orthogonal or substantially orthogonal with respect to the inner hole.

Moreover, in the reservoir tank of the present invention, a horizontal cross section of the interior of the reservoir tank is formed in a substantially rectangular shape, the hydraulic fluid supply port is disposed in an end portion on one side in a long-side direction of the substantially rectangular shape, and the hydraulic fluid supply opening opens into the hydraulic fluid storage chamber toward an end portion on the opposite side of the end portion on the one side in the long-side direction.

Moreover, in the reservoir tank of the present invention, in a state where the reservoir tank is installed in a vehicle, the long sides of the substantially rectangular shape of the horizontal cross section of the interior are set so as to coincide with the vehicle front-rear direction or so as to substantially coincide with the vehicle front-rear direct ion, the hydraulic fluid supply port is disposed projecting toward either one side of the vehicle right side and the vehicle left side from the lower portion of the outer peripheral wall on the vehicle rear side, and the hydraulic fluid supply opening opens into the hydraulic fluid storage chamber toward the vehicle front side.

Further, a master cylinder of the present invention comprises at least: a cylinder body; a piston that is inserted inside the cylinder body so as to be air-tight and slidable, forms a hydraulic chamber, and generates hydraulic pressure in the hydraulic chamber at a time of actuation; and a hydraulic fluid supply hole that is disposed in the cylinder body and is always communicated with the hydraulic chamber, wherein the reservoir tank of any one of the present invention described above which is disposed away from the cylinder body is connected to the hydraulic fluid supply.hole.

Moreover, a brake system of the present invention comprises at least: a reservoir tank that stores hydraulic fluid; a master cylinder to which the hydraulic fluid inside the reservoir tank is supplied via a pipe and which generates brake hydraulic pressure at a time of actuation; and a brake cylinder that is actuated by the hydraulic pressure from the master cylinder, wherein the master cylinder is the master cylinder of the present invention described above.

According to the reservoir tank of the present invention configured in this way, the reservoir tank is equipped with the hydraulic fluid support port that is disposed projecting outward from the lower portion of the outer peripheral wall and supplies the hydraulic fluid by means of the inner hole disposed extending into the hydraulic fluid storage chamber, and the hydraulic fluid supply opening that allows the inner hole disposed extending into the hydraulic fluid storage chamber to be communicated with the hydraulic fluid storage chamber is disposed having a predetermined angle with respect to the inner hole. Because of this, in a case where the vehicle-that is, the reservoir tank-has tilted such that the hydraulic fluid moves to the opposite side of the hydraulic fluid supply port in a state where the storage quantity of the hydraulic fluid inside the reservoir tank is relatively small and the fluid level of that hydraulic fluid is near the MIN line, it becomes possible to effectively suppress the entry of air to the master cylinder connected to the reservoir tank. In particular, in a case where an external hydraulic pressure control unit is actuated and the hydraulic fluid in the reservoir tank is taken in the brake hydraulic pressure control unit in a state where the storage quantity of the hydraulic fluid is low and the vehicle has tilted in this way, the entry of air can be even more effectively suppressed.

By disposing the hydraulic fluid supply port on the vehicle rear side of the reservoir tank and by disposing the hydraulic fluid supply opening so as face the vehicle front side in the opposite direction of the installation position of the hydraulic fluid supply port, in a case where the hydraulic pressure control unit has been actuated in a state where the storage quantity of the hydraulic fluid is small and the vehicle has tilted as described above, it becomes possible to more effectively suppress the entry of air to the master cylinder.

On top of that, the horizontal cross section of the interior of the reservoir tank is formed in a substantially rectangular shape, and the reservoir tank is installed in the vehicle such that the long sides of that substantially rectangular shape coincide with the vehicle front-rear direction or substantially coincide with the vehicle front-rear direction. Because of this, when the vehicle has tilted such that the front side of the vehicle becomes lower, the hydraulic fluid inside the reservoir tank largely moves to the vehicle front side, so the fluid level inside the reservoir tank moves extremely close to the hydraulic fluid supply opening. Consequently, it becomes possible to even more effectively suppress the entry of air to the master cylinder.

Moreover, because the hydraulic fluid supply opening is disposed in the portion of the hydraulic fluid supply port disposed inside the reservoir tank and forming the inner hole, the structure of the hydraulic fluid supply path can be made simple and the hydraulic fluid supply path can be formed inexpensively.

Further, according to the master cylinder using the reservoir tank of the present invention, it becomes possible to efficiently generate brake hydraulic pressure because the entry of air from the reservoir tank is effectively suppressed.

According to the brake system equipped with the master cylinder of the present invention, it becomes possible to more reliably perform normal brake actuation resulting from stepping on a brake pedal, let alone automatic brake actuation, because brake hydraulic pressure can be efficiently generated.

### BRIEF DESCRIPTION OF THE DRAWINGS

FIG. 1A is a view schematically showing a brake system equipped with a master cylinder using one example of an embodiment of a reservoir tank pertaining to the present invention, and FIG. 1B is a partially enlarged view as seen from direction 1B in FIG. 1A;
FIG. 2A is a plan view of the reservoir tank of the example shown in FIG. 1, and FIG. 2B is a right side view of this reservoir tank;
FIG. 3A is a view showing the reservoir tank in FIG. 2A excluding an upper half body, FIG. 3B is a partially enlarged cross-sectional view along line IIIB-IIIB in FIG. 3A, and FIG. 3C is a partial perspective view as seen from direction IIIC in FIG. 3B;
FIG. 4A is a partial view of the reservoir tank shown in FIG. 3A, FIG. 4B is the same partial view as FIG. 4A showing a reservoir tank of a comparative example with respect to the present invention, FIG. 4C is the same partial view as FIG. 4A showing a reservoir tank of another comparative example with respect to the present invention, and FIG. 4D is a view describing the action of the reservoir tanks shown in FIG. 4A to FIG. 4C; and
FIG. 5 is a view partially showing another example of the embodiment of the reservoir tank of the present invention.

### DETAILED DESCRIPTION

Modes for carrying out the present invention will be described below using the drawings.

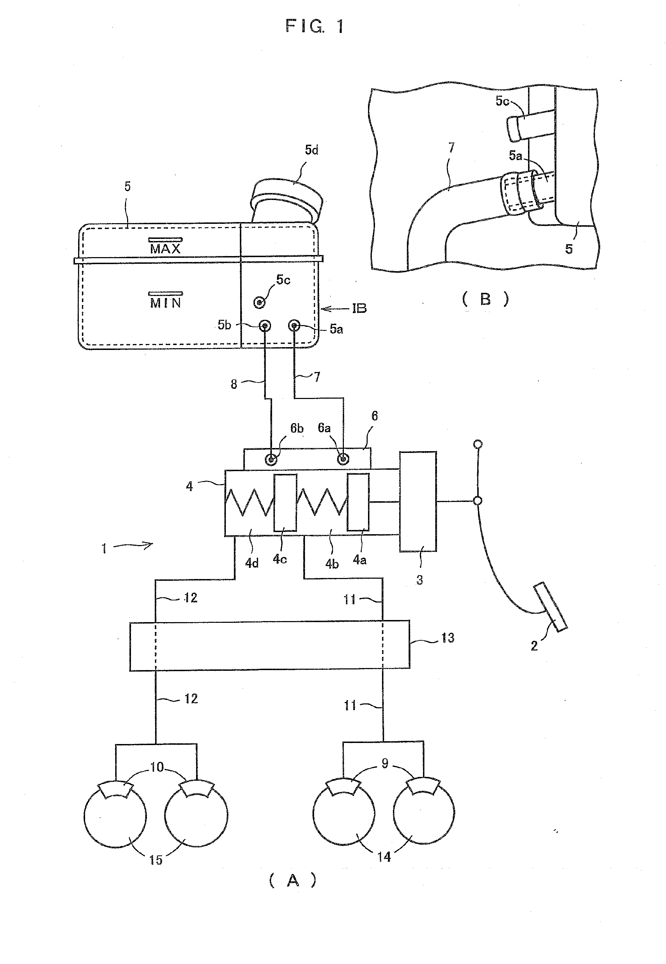

FIG. 1A is a view schematically showing a brake system equipped with a master cylinder using one example of an embodiment of a reservoir tank pertaining to the present invention, and FIG. 1B is a partially enlarged view as seen from direction IB in FIG. 1A.

As shown in FIG. 1A, a hydraulic brake system 1 of this example is basically the same as a conventionally publicly-known common dual hydraulic brake system. That is, the hydraulic brake system 1 is equipped with a brake pedal 2, a brake booster 3 comprising a negative pressure booster or the like, a tandem master cylinder 4, a reservoir tank 5, a reservoir tank connection-use connector 6 , hoses 7 and 8 that are dual brake-use hydraulic fluid supply pipes, dual brake cylinders 9 and 10, dual brake hydraulic pipes 11 and 12, and a brake hydraulic pressure control unit 13 such as a vehicle stability control unit.

The tandem master cylinder 4 has, like a conventionally publicly-known tandem master cylinder, a primary piston 4a that is inserted inside a cylinder body so as to be slidable and air-tight, a primary hydraulic chamber 4b that is sectioned off and formed by this primary piston 4a, a secondary piston 4c that is inserted inside a cylinder body so as to be slidable and air-tight, and a secondary hydraulic chamber 4d that is sectioned off and formed by this secondary piston 4c.

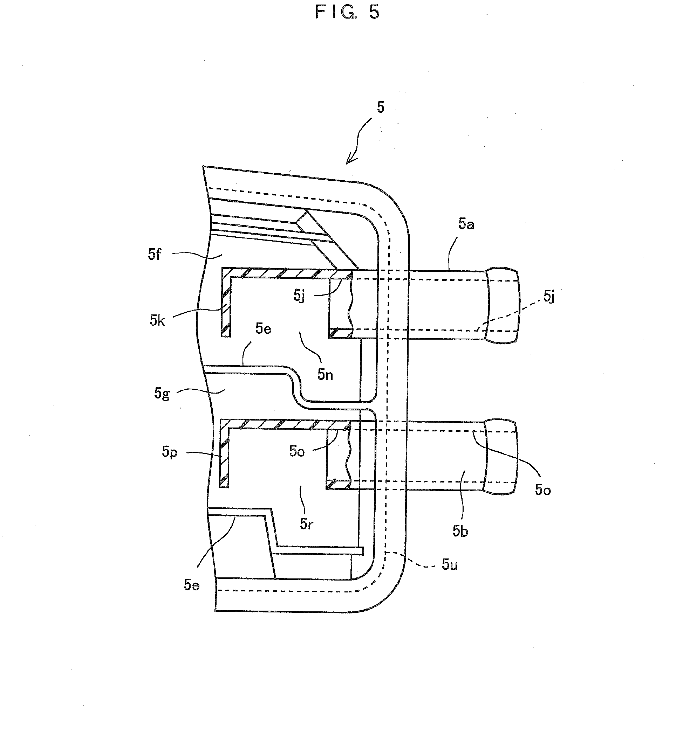

The reservoir tank 5 is disposed away from the tandem master cylinder 4. This reservoir tank 5 has a pair of tubular ports: a brake-use hydraulic fluid supply primary port 5a and a brake-use hydraulic fluid supply secondary port 5b. In FIG. 1, 5c is a clutch-use hydraulic fluid supply port for supplying clutch-use hydraulic fluid to an unillustrated clutch-use master cylinder, and 5d is a hydraulic fluid inlet for pouring hydraulic fluid into the reservoir tank 5. That is, the hydraulic fluid is poured into the reservoir tank 5 as brake-use hydraulic fluid and clutch-use hydraulic fluid from the hydraulic fluid inlet 5d. In the present invention, the hydraulic fluid inside the reservoir tank 5 will be called simply "hydraulic fluid" in a case where it is used in common for brake-use hydraulic fluid and clutch-use hydraulic fluid and will be called "brake-use hydraulic fluid" or "clutch-use hydraulic fluid" in a case where it is used individually for brake-use hydraulic fluid or clutch-use hydraulic fluid.

The reservoir tank connection-use connector 6 is mounted on top of the tandem master cylinder 4 in this example. This reservoir tank connection-use connector 6 has a pair of reservoir tank connection-use nipples 6a and 6b. The one brake-use hydraulic fluid supply primary port 5a of the reservoir tank 5 and the one reservoir tank connection-use nipple 6a of the reservoir tank connection-use connector 6 are connected to each other via the one hose 7 of the two lines, and the other brake-use hydraulic fluid supply secondary port 5b of the reservoir tank 5 and the other reservoir tank connection-use nipple 6b of the reservoir tank connection-use connector 6 are connected to each other via the other hose 8 of the two lines.

Further, the one reservoir tank connection-use nipple 6a of the reservoir tank connection-use connector 6 is connected to an unillustrated primary hydraulic fluid supply hole disposed in the cylinder body and communicated with the primary hydraulic chamber 4b. Moreover, the other reservoir tank connection-use nipple 6b of the reservoir tank connection-use connector 6 is connected to an unillustrated secondary hydraulic fluid supply hole disposed in the cylinder body and communicated with the secondary hydraulic fluid chamber 4d.

Additionally, the brake-use hydraulic fluid inside the reservoir tank 5 is supplied to the primary hydraulic chamber 4b and the secondary hydraulic chamber 4d of the tandem master cylinder 4 via the hoses 7 and 8 and the reservoir tank connection-use connector 6. The brake-use hydraulic fluid that has been supplied to the tandem master cylinder 4 is further supplied to the brake cylinders 9 and 10 of each line via the dual brake hydraulic pipes 11 and 12.

The brake hydraulic pressure control unit 13 is actuated by a predetermined actuation condition, uses an unillustrated pump in the brake hydraulic pressure control unit 13 to take in the brake-use hydraulic fluid inside the reservoir tank 5 via the tandem master cylinder 4, actuates the brakes automatically with the brake-use hydraulic fluid it has taken in, and performs control of the brake hydraulic pressure.

When a driver steps on the brake pedal 2, the brake booster 3 is actuated, boosts the pedal force by a predetermined servo ratio, and outputs the boosted pedal force. The primary piston 4a of the tandem master cylinder 4 is actuated by the output of this brake booster 3 to supply the brake-use hydraulic fluid in the primary hydraulic fluid chamber 4b to the brake cylinders 9 of one line via the brake hydraulic pipe 11. Further, the secondary piston 4c is actuated to supply the brake-use hydraulic fluid in the secondary hydraulic fluid chamber 4d to the brake cylinders 10 of the other line via the brake hydraulic pipe 12. When the loss stroke of each brake line ceases, the tandem master cylinder 4 generates brake hydraulic pressure. This brake hydraulic pressure of the tandem master cylinder 4 is transmitted to each of the brake cylinders 9 and 10, each of the brake cylinders 9 and 10 generates a braking force, and brakes are applied to wheels 14 and 15 of each line.

Further, when the predetermined actuation condition of the brake hydraulic pressure control unit 13 is established, the brake hydraulic pressure control unit 13 is actuated and the brake-use hydraulic fluid inside the reservoir tank 5 is taken in by the pump of this brake hydraulic pressure control unit 13 via the brake-use hydraulic fluid supply primary port 5a, the brake-use hydraulic fluid supply secondary port 5b, the hoses 7 and 8, the reservoir tank connection-use nipples 6a and 6b, the tandem master cylinder 4, and the brake hydraulic pipes 11 and 12. Additionally, automatic braking is performed as a result of the brake-use hydraulic fluid that has been taken in being supplied to the brake cylinders 9 and 10 of each line. At this time, the brake hydraulic pressure is controlled by the brake hydraulic pressure control unit 13 such that the braking force of the automatic braking becomes a desired magnitude.

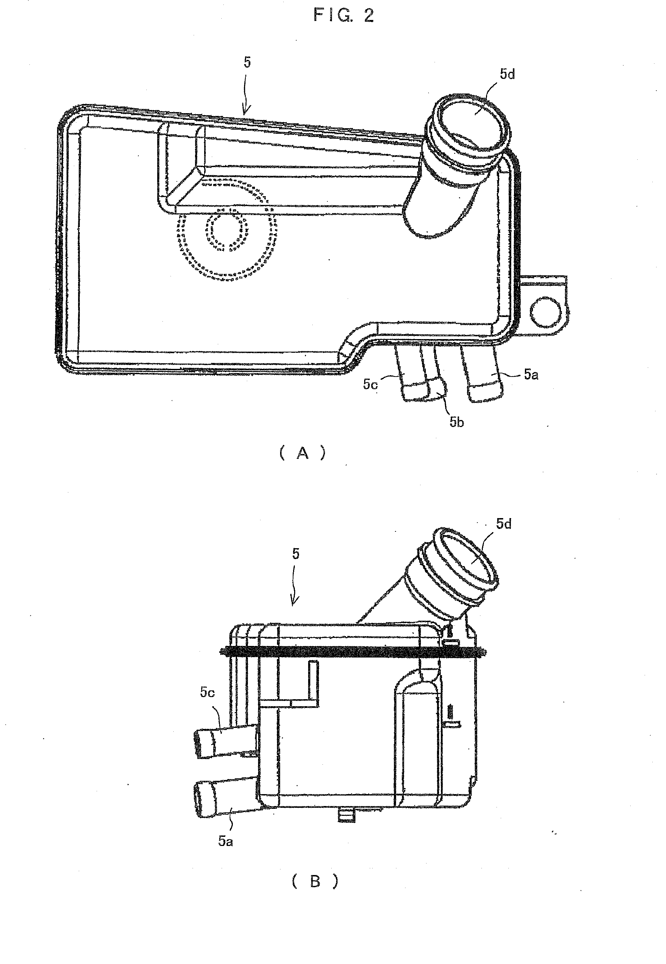

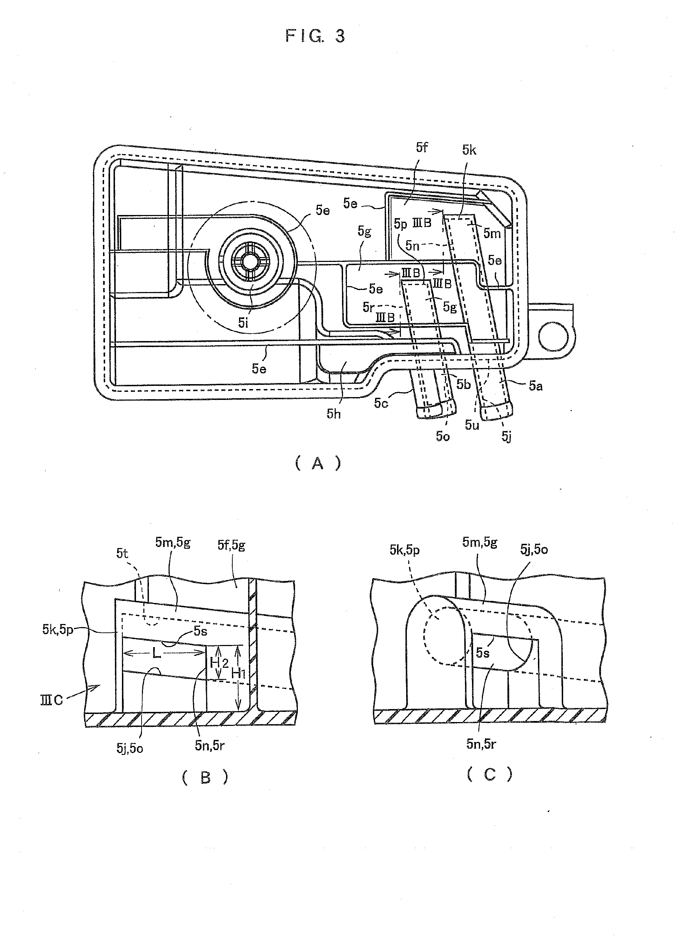

FIG. 2A is a plan view of the reservoir tank of this example, FIG. 2B is a right side view of this reservoir tank (a view seen from the right in FIG. 2A), FIG. 3A is a view showing the reservoir tank in FIG. 2A excluding an upper half body, FIG. 3B is a partially enlarged cross-sectional view along line IIIB-IIIB in FIG. 3A, and FIG. 3C is a partial perspective view as seen from direction IIIC in FIG. 3B.

As shown in FIG. 2A, FIG. 2B, and FIG. 3A, the reservoir tank 5 has a horizontal cross section that is formed in a substantially rectangular shape, and the reservoir tank 5 is installed in the vehicle such that the long sides of the substantially rectangular shape coincide with the vehicle front-rear direction or substantially coincide with the vehicle front-rear direction. Further, the pair of the brake-use hydraulic fluid supply primary port 5a and the brake-use hydraulic fluid supply secondary port 5b of the reservoir tank 5 are disposed projecting toward the vehicle left side from a lower portion of an outer peripheral wall 5u on the vehicle rear side of the reservoir tank 5 (the brake-use hydraulic fluid supply primary port 5a and the brake-use hydraulic fluid supply secondary port 5b can also be disposed projecting toward the vehicle right side of the reservoir tank 5). Inside the reservoir tank 5, a primary fluid storage chamber 5f, a secondary fluid storage chamber 5g, a clutch-use hydraulic fluid storage chamber 5h, and a liquid level detection chamber 5i are sectioned off and formed by partition walls 5e like in a conventionally publicly-known reservoir tank. The chambers 5f, 5g, 5h, and 5i are communicated with each other like in a publicly-known reservoir tank.

An inner hole 5j in the brake-use hydraulic fluid supply primary port 5a is disposed extending linearly as far as the primary fluid storage chamber 5f inside the reservoir tank 5, and an inner hole 5o in the other brake-use hydraulic fluid supply secondary port 5b is disposed extending linearly as far as the secondary fluid storage chamber 5g inside the reservoir tank 5. The primary fluid storage chamber side end of the inner hole 5j in the brake-use hydraulic fluid supply primary port 5a is closed off by a blocking wall 5k. A substantially rectangular primary fluid supply opening 5n is formed in a peripheral wall of a primary fluid storage chamber side end portion 5m of a portion forming the inner hole 5j in this brake-use hydraulic fluid supply primary port 5a. As shown in FIG. 3B and FIG. 3C, this primary fluid supply opening 5n is communicated in an orthogonal direction or in a substantially orthogonal direction with the inner hole 5j in the brake-use hydraulic fluid supply primary port 5a and opens in the vehicle front direction. That is, the inner hole 5j opens into the primary fluid storage chamber 5f in the vehicle front direction, and a substantially L-shaped brake-use hydraulic fluid supply path whose primary fluid storage chamber side end portion is bent is formed by the primary fluid supply opening 5n and the inner hole 5j.

Further, the secondary fluid storage chamber side end of the inner hole 5o in the brake-use hydraulic fluid supply secondary port 5b is closed off by a blocking wall 5p. A substantially rectangular secondary fluid supply opening 5r is formed in a peripheral wall of a secondary fluid storage chamber side end portion 5q of a portion forming the inner hole 5o in this brake-use hydraulic supply secondary port 5b. As shown in FIG. 3B and FIG. 3C, this secondary fluid supply opening 5r is also similarly communicated with the inner hole 5o in the brake-use hydraulic fluid supply secondary port 5b and opens in the vehicle front direction. That is, the inner hole 5o opens into the secondary fluid storage chamber 5g in the vehicle front direction via the secondary fluid supply opening 5r, and a substantially L-shaped brake-use hydraulic fluid supply path whose secondary fluid storage chamber side end portion is bent is formed by the secondary fluid supply opening 5r and the inner hole 5o. Consequently, the brake-use hydraulic fluid inside the reservoir tank 5 flows along a bent path from the primary fluid supply opening 5n to the inner hole 5j or flows along a bent path from the secondary fluid supply opening 5r to the inner hole 5o.

In the reservoir tank 5 of this example configured in this manner, the primary fluid storage chamber 5f becomes communicated with the primary hydraulic chamber 4b of the tandem master cylinder 4 via the primary fluid supply opening 5n in the brake-use hydraulic fluid supply primary port 5a, the inner hole 5j in the brake-use hydraulic fluid supply primary port 5a, the hose 7, and the reservoir tank connection-use nipple 6a of the reservoir tank connection-use connector 6. Further, the secondary fluid storage chamber 5g becomes communicated with the secondary hydraulic chamber 4d of the tandem master cylinder 4 via the secondary fluid supply opening 5p in the brake-use hydraulic fluid supply secondary port 5b, the inner hole 5o in the brake-use hydraulic fluid supply secondary port 5b, the hose 8, and the reservoir tank connection-use nipple 6b of the reservoir tank connection-use connector 6.

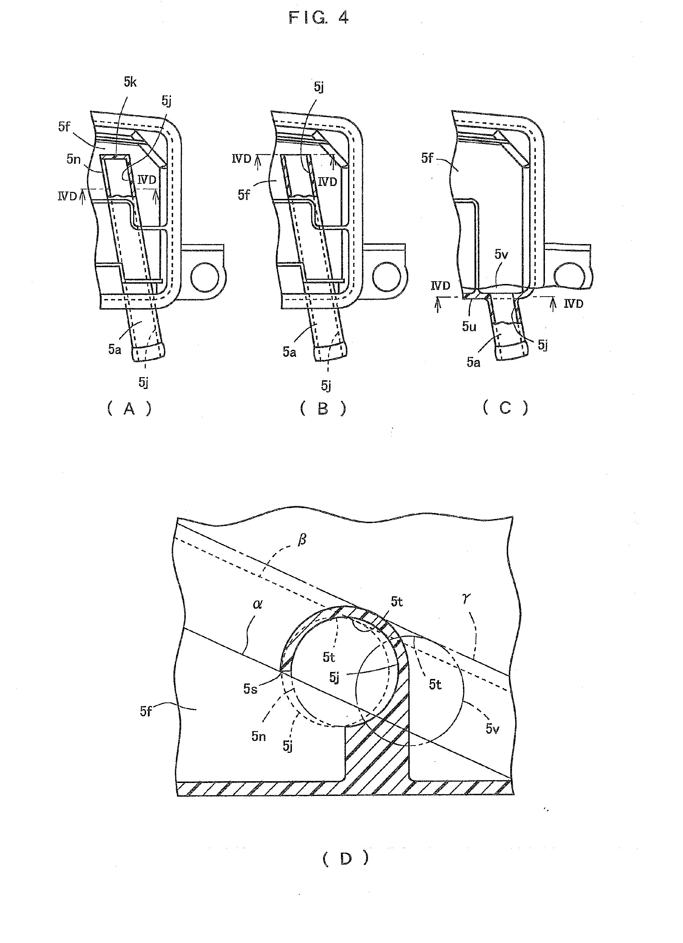

Additionally, as shown in FIG. 4A for example, in the brake-use hydraulic fluid supply primary port 5a of this example, in a case where the vehicle-that is, the reservoir tank 5-has tilted such that the hydraulic fluid moves to the vehicle front side on the opposite side of the brake-use hydraulic fluid supply primary port 5a in a state where the storage quantity of the hydraulic fluid inside the reservoir tank 5 is relatively small and the fluid level of that hydraulic fluid is near the MIN line, the hydraulic fluid moves to the vehicle front side of the reservoir tank 5 and the height position of the fluid level of the hydraulic fluid changes. At this time, the fluid level of the hydraulic fluid becomes a position that is lower than an uppermost portion 5t of the inner hole 5j in the brake-use hydraulic fluid supply primary port 5a and in which the primary fluid supply opening 5n is not exposed to air at a height position of a fluid level α indicated by the solid line in FIG. 4D which is decided by an upper edge 5s of the primary fluid supply opening 5n. The height position of the upper edge 5s of the primary fluid supply opening 5n is set to a position that is lower than the height position of the uppermost portion 5t of the inner hole 5j. The height position of the upper edge of the secondary fluid supply opening 5r is also the same as in the case of the upper edge 5s of the primary fluid supply opening 5n.

In contrast, as shown in FIG. 4B for example, in the reservoir tank 5 where the inner hole 5j in the brake-use hydraulic fluid supply primary port 5a extends linearly without bending and opens to the primary fluid storage chamber 5f, when the vehicle has tilted the same amount as described above, the fluid level of the hydraulic fluid becomes a position in which the inner hole 5j is not exposed to air at a height position of a fluid level β indicated by the dashed line in FIG. 4D which is decided by the substantially uppermost portion (more specifically, a position slightly lower than the uppermost portion) of the inner hole 5j in the brake-use hydraulic fluid supply primary port 5a. The height position of this fluid level β becomes a position that is relatively high compared to the height position of the straight line α of the reservoir tank 5 of this example. That is, in the case of the reservoir tank 5 shown in FIG. 4B, the potential for air to be taken in becomes higher when, for example, the brake hydraulic pressure control unit 13 has been actuated even when the storage quantity of the hydraulic fluid is a relatively large quantity compared to the reservoir tank 5 of this example.

Further, in the reservoir tank 5 where the brake-use hydraulic fluid supply primary port 5a is disposed projecting outward from the outer peripheral wall 5u and where the inner hole 5j in the brake-use hydraulic fluid supply primary port 5a is not disposed extending into the primary fluid storage chamber 5f like in the reservoir tank described in JP-A-2007-283858, when the vehicle has tilted the same amount as described above, the fluid level of the hydraulic fluid becomes a position where a through hole 5v (that is, the inner hole 5j) is not exposed to air at a height position of a fluid level Υ indicated by the single-dashed chain line in FIG. 4D which is decided by the substantially uppermost portion (more specifically, a position slightly lower than the uppermost portion) of the inner hole 5j (that is, the through hole 5v in the outer peripheral wall 5u; it has the same diameter as the inner hole 5j shown in FIG. 4A) of the brake-use hydraulic fluid supply primary port 5a. The height position of this fluid level Υ is a position that is a little higher compared to the height position of the straight lines β of the reservoir tank 5 shown in FIG. 4B. Consequently, the height position of this fluid level Υ is a position that is much higher compared to the height position of the straight line α of the reservoir tank 5 of this example. That is, in the case of the reservoir tank 5 shown in FIG. 4C, the potential for air to be taken in becomes higher when, for example, the brake hydraulic pressure control unit 13 has been actuated even when the storage quantity of the hydraulic fluid is a much larger quantity compared to the reservoir tank 5 of this example.

The case of the brake-use hydraulic fluid supply secondary port 5b is also the same as the case of the brake-use hydraulic fluid supply primary port 5a as described above.

Additionally, in FIG. 3B, making a height position H₁ of the upper edge 5s of the primary fluid supply opening 5n as low as possible is preferable for ensuring that the intake of air can be effectively suppressed even if the storage quantity of the hydraulic fluid becomes low. In that case, it is necessary to ensure the desired flow rate of the brake-use hydraulic fluid flowing through the primary fluid supply opening 5n, but the desired flow rate of the brake-use hydraulic fluid can be ensured by appropriately setting the opening area of the primary fluid supply opening 5n-that is, a width L and a real height H₂ of the primary fluid supply opening 5n in FIG. 3B.

According to the reservoir tank 5 of this example, the inner hole 5j in the brake-use hydraulic fluid supply primary port 5a is disposed extending into the primary fluid storage chamber 5f inside the reservoir tank 5, and the primary fluid supply opening 5n that allows this inner hole 5j to be communicated with the primary fluid storage chamber 5f is disposed orthogonal or substantially orthogonal to the inner hole 5j . Further, the inner hole 5o in the brake-use hydraulic fluid supply secondary port 5b is disposed extending into the secondary fluid storage chamber 5g inside the reservoir tank 5, and the secondary fluid supply opening 5r that allows this inner hole 5o to be communicated with the secondary fluid storage chamber 5g is disposed orthogonal or substantially orthogonal to the inner hole 5o. Because of this, in a case where the vehicle has tilted such that the hydraulic fluid moves to the opposite side of the brake-use hydraulic fluid supply primary port 5a in a state where the storage quantity of the hydraulic fluid inside the reservoir tank 5 is relatively small and the fluid level of that hydraulic fluid is near the MIN line, it becomes possible to effectively suppress the entry of air to the tandem master cylinder 4. In particular, in a case where the brake hydraulic pressure control unit 13 is actuated and the hydraulic fluid-that is, the brake-use hydraulic fluid-in the reservoir tank 5 is taken in the brake hydraulic pressure control unit in a state where the storage quantity of the hydraulic fluid is low and the vehicle has tilted in this way, the entry of air can be even more effectively suppressed.

Also, by disposing the brake-use hydraulic fluid supply primary port 5a and the brake-use hydraulic fluid supply secondary port 5b on the vehicle rear side of the reservoir tank 5 and by disposing the primary fluid supply opening 5n and the secondary fluid supply opening 5r so as to face the vehicle front side in the opposite direction of the installation positions of the ports 5a and 5b, in a case where the brake hydraulic pressure control unit 13 has been actuated in a state where the storage quantity of the hydraulic fluid is small and the vehicle has tilted as described above, it becomes possible to more effectively suppress the entry of air to the tandem master cylinder 4.

On top of that, the horizontal cross section of the reservoir tank 5 is formed in a substantially rectangular shape, and the reservoir tank 5 is disposed such that the long sides of that substantially rectangular shape coincide with the vehicle front-rear direction or substantially coincide with the vehicle front-rear direction. Because of this, when the vehicle has tilted such that the front side of the vehicle becomes lower, the hydraulic fluid inside the reservoir tank 5 largely moves to the vehicle front side, so the fluid level inside the reservoir tank 5 moves extremely close to the primary fluid supply opening 5n and the secondary fluid supply opening 5r. Consequently, it becomes possible to even more effectively suppress the entry of air to the tandem master cylinder 4.

Moreover, because the primary fluid supply opening 5n and the secondary fluid supply opening 5r are disposed in the portions of the brake-use hydraulic fluid supply primary port 5a and the brake-use hydraulic fluid supply secondary port 5b disposed inside the reservoir tank 5, the structure of the brake-use hydraulic fluid supply paths can be made simple and the brake-use hydraulic fluid supply paths can be formed inexpensively.

Further, according to the tandem master cylinder 4 using the reservoir tank 5 of this example, it becomes possible to efficiently generate brake hydraulic pressure because the entry of air from the reservoir tank 5 is effectively suppressed.

According to the brake system 1 equipped with the tandem master cylinder 4 of this example, it becomes possible to more reliably perform normal brake actuation resulting from stepping on the brake pedal 2, let alone automatic brake actuation, because brake hydraulic pressure can be efficiently generated.

FIG. 5 is a view partially showing another example of the embodiment of the reservoir tank of the present invention.

In the reservoir tank 5 of the example described above, the pair of the brake-use hydraulic fluid supply primary port 5a and the brake-use hydraulic fluid supply secondary port 5b are disposed projecting in the left direction of the vehicle from the outer peripheral wall 5u of the reservoir tank 5, but as shown in FIG. 5, in the reservoir tank 5 of this example, the pair of the brake-use hydraulic fluid supply primary port 5a and the brake-use hydraulic fluid supply secondary port 5b are disposed projecting in the rear direction of the vehicle from the outer peripheral wall 5u of the reservoir tank 5. Additionally, the primary fluid supply opening 5n and the secondary fluid supply opening 5r are disposed so as to face the left direction of the vehicle-that is, so as to face a direction orthogonal or substantially orthogonal to the inner holes 5j and 5o. The primary fluid supply opening 5n and the secondary fluid supply opening 5r can also be disposed so as to face the right direction of the vehicle.

The other configurations of the reservoir tank 5 of this example are substantially the same, and the reservoir tank 5, the primary fluid storage chamber 5f, the secondary fluid storage chamber 5g, and the clutch-use hydraulic fluid storage chamber 5h and so forth of the example described above are only slightly changed. The action and effects of the reservoir tank 5 are also substantially the same as those of the reservoir tank 5 of the example described above.

The present invention is not limited to the examples described above and is capable of various design changes. For example, in the examples described above, the primary fluid supply opening 5n, and the secondary fluid supply opening 5r are orthogonal or substantially orthogonal to the inner holes 5j and 5o, respectively, but the primary fluid supply opening 5n and the secondary fluid supply opening 5r can also be disposed so as to have predetermined angles with respect to the inner holes 5j and 5o, respectively.

Further, in the example shown in FIG. 3A to FIG. 3C, the pair of the brake-use hydraulic fluid supply primary port 5a and the brake-use hydraulic fluid supply secondary port 5b are disposed inclined such that their portions disposed inside the reservoir tank 5 become higher than their portions disposed outside the reservoir tank 5, but the brake-use hydraulic fluid supply primary port 5a and the brake-use hydraulic fluid supply secondary port 5b can also be disposed horizontally or substantially horizontally. Moreover, the master cylinder is not limited to a tandem master cylinder and may also be a single master cylinder. In that case, the number of brake-use hydraulic fluid supply ports becomes one. What matters is that the present invention is capable of various design changes within the scope of matters described in the claims.

The reservoir tank pertaining to the present invention can be suitably used for a reservoir tank that stores hydraulic fluid and is connected by a pipe to a master cylinder.

Further, the master cylinder using the reservoir tank pertaining to the present invention can be suitably used for a master cylinder that is used in a hydraulically actuated system such as a hydraulic brake system using hydraulic pressure such as oil pressure and is for generating hydraulic pressure.

Moreover, the brake system pertaining to the present invention can be suitably used for a hydraulic brake system using a master cylinder.

## Claims

1. A reservoir tank comprising at least:
a hydraulic fluid storage chamber that stores hydraulic fluid; and
a hydraulic fluid supply port that is disposed projecting outward from a lower portion of an outer peripheral wall and supplies the hydraulic fluid by means of an inner hole disposed extending into the hydraulic fluid storage chamber,
wherein a hydraulic fluid supply opening that allows the inner hole disposed extending into the hydraulic fluid storage chamber to be communicated with the hydraulic fluid storage chamber is disposed having a predetermined angle with respect to the inner hole.

2. The reservoir tank according to claim 1, wherein the hydraulic fluid supply opening is disposed orthogonal or substantially orthogonal with respect to the inner hole.

3. The reservoir tank according to claim 1 or 2, wherein
a horizontal cross section of the interior of the reservoir tank is formed in a substantially rectangular shape,
the hydraulic fluid supply port is disposed in an end portion on one side in a long-side direction of the substantially rectangular shape, and
the hydraulic fluid supply opening opens into the hydraulic fluid storage chamber toward an end portion on the opposite side of the end portion on the one side in the long- side direction.

4. The reservoir tank according to claim 3, wherein
in a state where the reservoir tank is installed in a vehicle, the long sides of the substantially rectangular shape of the horizontal cross section of the interior are set so as to coincide with the vehicle front-rear direction or so as to substantially coincide with the vehicle front-rear direction,
the hydraulic fluid supply port is disposed projecting toward either one side of the vehicle right side and the vehicle left side from the lower portion of the outer peripheral wall on the vehicle rear side, and
the hydraulic fluid supply opening opens into the hydraulic fluid storage chamber toward the vehicle front side.

5. A master cylinder comprising at least:
a cylinder body;
a piston that is inserted inside the cylinder body so as to be air-tight and slidable, forms a hydraulic chamber, and generates hydraulic pressure in the hydraulic chamber at a time of actuation; and
a hydraulic fluid supply hole that is disposed in the cylinder body and is always communicated with the hydraulic chamber,
wherein the reservoir tank according to any one of claims 1 to 4 which is disposed away from the cylinder body is connected to the hydraulic fluid supply hole.

6. A brake system comprising at least:
a reservoir tank that stores hydraulic fluid;
a master cylinder to which the hydraulic fluid inside the reservoir tank is supplied via a pipe and which generates brake hydraulic pressure at a time of actuation; and
a brake cylinder that is actuated by the hydraulic pressure from the master cylinder,
wherein the master cylinder is the master cylinder according to claim 5.
